Europäisches Patentamt

(19) European Patent Office

Office ·européen des brevets

(11) Numéro de publication : **0 023 450**
**B1**

(12) **FASCICULE DE BREVET EUROPÉEN**

(45) Date de publication du fascicule du brevet :
01.06.83

(21) Numéro de dépôt : **80401085.8**

(22) Date de dépôt : **22.07.80**

(51) Int. Cl.³ : **G 01 L   9/08**, G 01 L 27/00

(54) Capteur à ondes élastiques de surface utilisant deux oscillateurs accordables reliés à un mélangeur de fréquence comportant un dispositif permettant le calibrage de la fréquence du signal de sortie et procédé de calibrage de cette fréquence.

(30) Priorité : **27.07.79 FR 7919427**

(43) Date de publication de la demande :
**04.02.81 Bulletin 81/05**

(45) Mention de la délivrance du brevet :
**01.06.83 Bulletin 83/22**

(84) Etats contractants désignés :
**BE CH DE GB LI**

(56) Documents cités :
**US A 4 100 811**

(73) Titulaire : **THOMSON-CSF**
**173, Boulevard Haussmann**
**F-75379 Paris Cedex 08 (FR)**

(72) Inventeur : **Coussot, Gérard**
**"THOMSON-CSF" - SCPI 173, Bld Haussmann**
**F-75360 Paris Cedex 08 (FR)**
Inventeur : **Hartemann, Pierre**
**"THOMSON-CSF" - SCPI 173, Bld Haussmann**
**F-75360 Paris Cedex 08 (FR)**

(74) Mandataire : **Lepercque, Jean, et al**
**THOMSON-CSF SCPI 173, Bld Haussmann**
**F-75379 Paris Cedex 08 (FR)**

Jouve, 18, rue St-Denis, 75001 Paris, France

# 0 023 450

Capteur à ondes élastiques de surface utilisant deux oscillateurs accordables reliés à un mélangeur de fréquence comportant un dispositif permettant le calibrage de la fréquence du signal de sortie et procédé de calibrage de cette fréquence

La présente invention concerne un capteur à ondes élastiques de surface utilisant deux oscillateurs accordables reliés à un mélangeur de fréquence et comportant un dispositif permettant le calibrage de la fréquence du signal de sortie et le procédé de calibrage de cette fréquence.

Il est connu d'utiliser les ondes élastiques de surface se propageant entre deux transducteurs à électrodes interdigitées dans un substrat piézoélectrique pour mesurer des accélérations, des forces ou des pressions s'exerçant sur une mince membrane contenue dans ce substrat. A cet effet, la ligne à retard formée entre deux transducteurs est rebouclée au moyen d'un amplificateur et constitue un oscillateur de fréquence variable fonction des variations de contrainte dans les matériaux.

Il est également connu d'associer deux oscillateurs de ce type, en implantant sur la même membrane deux lignes à retard et de combiner les fréquences de sortie de ces deux oscillateurs de telle sorte qu'une variation des contraintes appliquées à la membrane produise des variations de fréquence en sens contraire. La fréquence de sortie du capteur ainsi réalisé est égale au battement entre ces deux fréquences. Ce procédé permet de compenser en grande partie notamment l'effet des dérives en température, les dérives en température se traduisant par des variations en fréquence de même signe dans les deux oscillateurs. Un dispositif de ce type est décrit par exemple dans le brevet US n° 4 100 811.

Pour certains types d'application, il est nécessaire que la fréquence de sortie du capteur de pression ne soit pas nulle à l'état de repos, c'est-à-dire en l'absence de toute contrainte. C'est notamment le cas d'un type de capteur utilisé en électronique automobile. Ce capteur permet d'effectuer des mesures de dépression par rapport à la pression atmosphérique et peut notamment être utilisé pour la commande d'un moteur d'automobile à combustion interne. La fréquence des deux oscillateurs constituant le capteur (et de ce fait la fréquence de sortie du capteur, différence de ces deux fréquences) dépend de nombreux paramètres, en particulier de la nature du cristal utilisé, de la nature des connexions et des caractéristiques des circuits électriques utilisés.

Dans le cadre des applications dites grand public, des contraintes économiques imposent l'utilisation d'éléments bon marché. Il s'ensuit que, par exemple, les amplificateurs constituant les circuits électroniques associés présentent des dispersions notables dans leurs paramètres caractéristiques. La conséquence directe est que la valeur de la fréquence de battement à l'état de repos n'est pas obtenue de manière reproductible d'un échantillon à l'autre.

Pour pallier ces difficultés, l'invention a donc pour objet un capteur de type comportant deux lignes à retard comprenant des transducteurs, portées par une première face d'un support, et soumises à des contraintes en sens opposé ; les lignes à retard étant en outre connectées par des circuits de liaison à des circuits électriques appropriés pour réaliser deux boucles constituant chacune un oscillateur produisant des signaux respectivement d'une première et d'une seconde fréquence ($f_1$, $f_2$) destinés à être mélangées pour produire un signal de sortie (S) d'une troisième fréquence ($f_S$) ; capteur caractérisé principalement en ce qu'il comprend un dispositif de calibrage constitué par au moins une ligne à retard supplémentaire ajustable par usinage laser ou par sablage, insérée dans les circuits de liaison d'un des oscillateurs.

L'invention a également pour objet un procédé de calibrage de la fréquence ($f_S$) du signal de sortie (S) d'un tel capteur.

L'invention sera mieux comprise et d'autres avantages apparaîtront à la lecture de la description ci-après en se référant aux dessins annexés parmi lesquels :

les figures 1 et 2 illustrent un exemple de capteur selon l'art connu ;

la figure 3 est le schéma électrique équivalent à un oscillateur à ondes élastiques de surface ;

la figure 4 illustre un premier procédé permettant le calibrage de la fréquence de sortie d'un capteur de pression ;

la figure 5 illustre le procédé selon l'invention ;

les figures 6 et 7 illustrent un capteur de pression à ondes élastiques comportant un dispositif permettant le calibrage selon le procédé de l'invention.

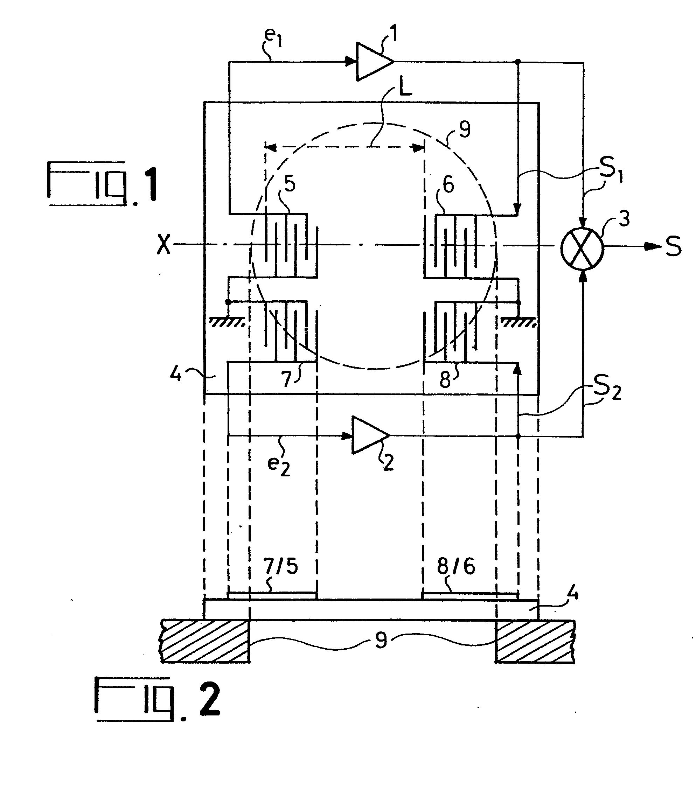

Les figures 1 et 2 représentent respectivement, en vue de dessus et en coupe, un capteur de pression à ondes élastiques de surface fonctionnant selon le principe d'un capteur à deux oscillateurs. Ce capteur comprend un substrat piézoélectrique, par exemple en quartz, constituant une plaquette solidaire d'un support 9. Ce support est muni d'un évidement central circulaire dont la projection sur la plaquette 4 est représentée sur la figure 1 en pointillé. La surface interne à ce cercle constitue la partie utile de la plaquette 4. Dans cette zone utile, sont réalisées deux lignes à retard, l'une d'axe X passant par le centre du cercle constituée par deux transducteurs 5 et 6 en forme de peignes aux dents imbriquées 5 et 6, l'autre constituée par deux transducteurs supplémentaires 7 et 8 disposés selon un axe parallèle à l'axe X et proche de la périphérie de la zone utile, de façon que les effets d'une différence de pression entre les deux faces sur les contraintes imposées aux zones correspondantes de la plaquette donc sur la vitesse de propagation des ondes, soient de sens opposé pour les deux lignes. Les oscillateurs sont réalisés en rebouclant sur eux-mêmes d'une part les transducteurs 5 et 6 et d'autre part les transducteurs 7 et 8, respectivement par les amplificateurs 1 et 2. Le cablage électrique est tel que les fréquences $f_1$ du signal présent à la sortie $S_1$ et $f_2$ du signal présent sur la connexion de sortie $S_2$ varient en sens contraire lorsque la différence de pression entre les faces supérieure et inférieure de la plaquette 4 varie. Ces fréquences sont mélangées par le circuit 3 qui fournit un signal de sortie S, de fréquence $f_S$ ou fréquence de battement égale à la différence des fréquences : $f_1 - f_2$.

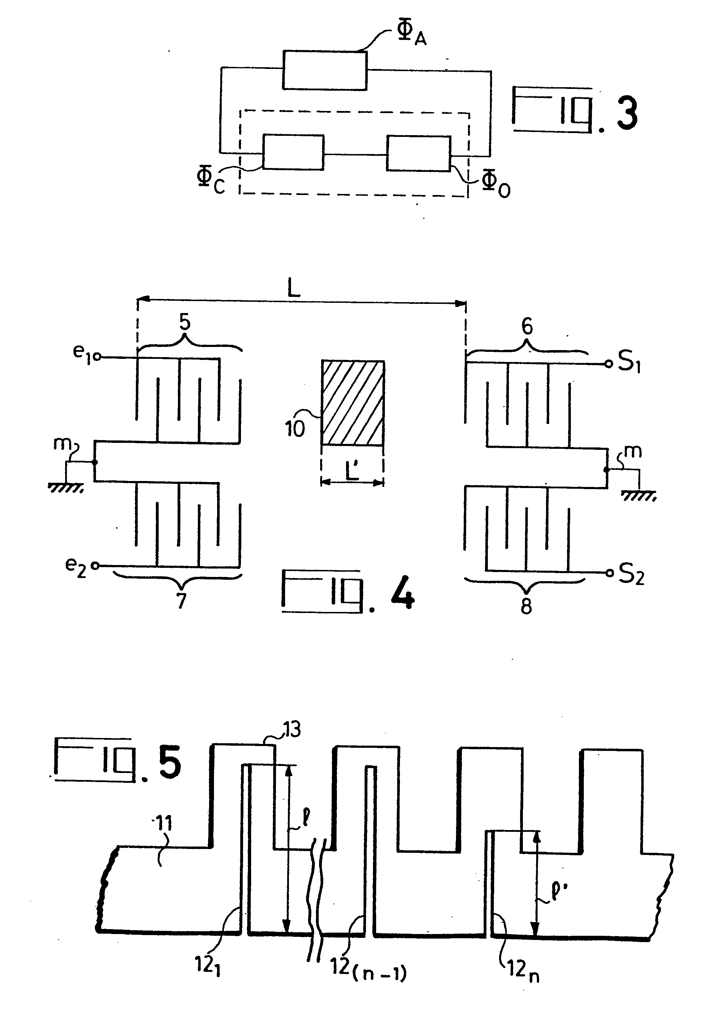

La figure 3 est un schéma électrique équivalent à chaque oscillateur.

Pour chacun des oscillateurs, les conditions d'oscillation sont données par la relation :

$$\Phi_a + \Phi_o = \Phi_c = 2\pi n \qquad (1)$$

Relation dans laquelle :
— n est un nombre entier ;
— $\Phi_o$ est le déphasage produit par la ligne de retard ;
— $\Phi_a$ est le déphasage produit par l'amplificateur, (respectivement 1 ou 2) ;
— $\Phi_c$ est le déphasage produit par les connexions d'entrées et de sorties (respectivement $e_1/S_1$, $e_2/S_2$).

La relation (1) peut encore s'écrire :

$$\omega\ (t_o + \tau) + \Phi_a = 2\pi n \qquad (2)$$

où :
— $\tau$ est le temps de parcours dans les connexions,
— $\Phi_a$ est le déphasage introduit par l'amplificateur,
— $t_o$ est le temps de parcours des ondes de surface entre le transducteur émetteur (5 ou 7) et le transducteur récepteur (6 ou 8) séparé par une distance L. Comme il est bien connu, cette distance L est égale à l'éloignement entre deux dents homologues des transducteurs émetteurs (5 ou 7) et récepteurs (6 ou 8) ;
— $\omega$ la pulsation.

Cette fréquence d'oscillation est alors égale à :

$$f = n - \Phi_a/2\pi n/t_o + \tau \qquad (3)$$

Après mélange dans le circuit 3, la fréquence de sortie ou fréquence de battement dépend donc de la nature du cristal, de l'amplificateur et de la forme et de la nature des connexions.

La plaquette 4 est taillée dans un cristal piézoélectrique. Le temps nécessaire à la propagation d'une onde émise par l'un des transducteurs émetteurs (5 ou 7) pour atteindre le transducteur récepteur homologue (6 ou 8) dépend de la qualité du cristal utilisé et du positionnement du masque par rapport aux axes cristallographiques. Pour le quartz, en coupe ST, il a été calculé une variation relative de vitesse de $10^{-4}$ par degré angulaire de décalage. D'où une variation de la fréquence $\Delta f/f$ peu différente de $10^{-4}n$ ; où n est le nombre de degrés.

Dans le cas d'une production en grande série, une erreur d'orientation de 2° environ est admise qui se décompose en environ 1° d'erreur due à l'orientation de la plaquette fournie et environ 1° d'erreur due au positionnement par l'opérateur. Ceci conduit, pour une valeur typique de la fréquence de fonctionnement de l'oscillateur égale à 100 MHz, à une variation $\Delta f$ de cette fréquence égale à environ 20 kHz.

Le temps de parcours dans les connexions intervient également dans la définition de la fréquence d'oscillation. Ce temps de parcours dépend de la nature de ces connexions, de leur configuration géométrique et des interactions entre ces différentes connexions et les transducteurs.

Enfin la fréquence de l'oscillation dépend également du déphasage apporté par l'amplificateur. Ce déphasage est lié notamment au gain de cet amplificateur. Celui-ci se présente en général sous forme d'un module comprenant des composants semiconducteurs intégrés sur une puce ou interconnectés sous forme d'un circuit hybride. Ces modules réalisés en grande série présentent des dispersions quant à leurs paramètres caractéristiques et en particulier quant à leur gain propre.

Pour une réalisation concrète, des valeurs typiques de la fréquence d'oscillation de chacun des oscillateurs est de l'ordre de 100 MHz. On souhaite une fréquence de battement au repos de l'ordre de 100 kHz. La reproductibilité de cette fréquence de battement doit être établie avec une précision de l'ordre de $\pm 1\%$, quelles que soient les causes de dérive.

Comme il a été vu précédemment, les seules erreurs dues au cristal sont de l'ordre de $\pm 20$ kHz, compte non tenu des dérives en température. Le fait d'utiliser deux oscillateurs permet d'atténuer en partie l'effet de ces dérives en température. D'autres dispositions, sortant du cadre de la présente invention, peuvent être adoptées permettant de réduire encore les effets résiduels des dérives en température.

Le retard moyen pour une géométrie de capteur donnée est de l'ordre de $t_o = 1.6$ µs. La précision souhaitée étant de $\pm 1\%$, la fréquence de battement doit être définie à $\pm 1$ KHz. Or, une variation de 1 KHz sur la fréquence d'oscillation conduit à une variation du retard : $\Delta t = t_o \cdot 10^{-5} = 0.016$ ns. Pour obtenir la reproductibilité des performances avec la précision souhaitée, il est donc nécessaire que la différence des retards entre les deux voies constituées chacune par un oscillateur, soit inférieure à cette valeur.

Dans ce qui précède, il a été supposé que l'onde de surface produite par le transducteur émetteur (5 ou 7) se propage librement à la surface de la plaquette piézoélectrique 4 sur une distance L. Le temps de propagation est alors donné par la formule :

$$t_o = L/V_{libre} \qquad (4)$$

où $V_{libre}$ est la vitesse de propagation de l'onde à la surface du substrat.

Si on dépose sur la plaquette, le long du parcours de l'onde, une plage métallique de longueur L', la vitesse de propagation est ralentie sur cette distance. Le temps nécessaire à l'onde émise pour franchir cette plage est donnée par la formule :

$$t' = L'/V_{métal} \qquad (5)$$

avec $V_{métal} < V_{libre}$ et $V_{métal}$ la vitesse de propagation dans la zone métallisée.

Ce ralentissement est dû à deux effets créant une interaction entre l'onde et le milieu de propagation : effet de court-circuit de champ électrique et effet de « chargement » par la masse propre de la plage métallique.

Le temps nécessaire à la propagation au retard apporté par la ligne devient :

$$t'_o = L - L'/V_{libre} + L'/V_{métal} \qquad (6)$$

La variation du retard est :

$$\Delta T = t'_o - t_o \qquad (7)$$

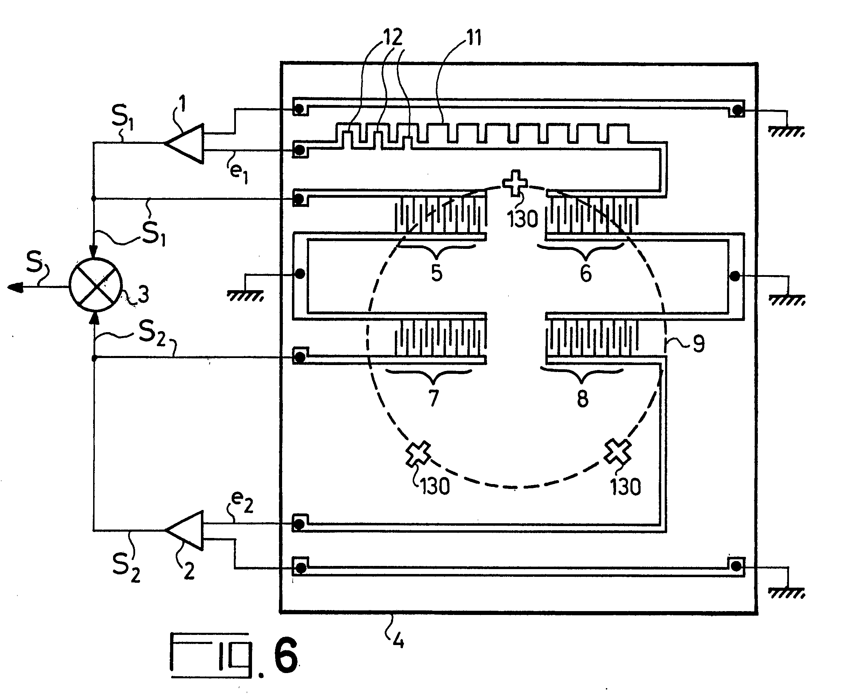

Un premier procédé pour ajuster la fréquence de sortie $f_S = f_1 - f_2$ du capteur consisterait à augmenter le retard apporté par l'une des voies, en disposant pour ce faire une plage métallique 10 entre les transducteurs 5 et 6, comme illustré sur la figure 4, et à ajuster la longueur L' de cette plage par découpage laser, par exemple, jusqu'à obtenir une fréquence de battement correcte.

A titre d'illustration non limitative, si L = L' :

$$\Delta T = t_o - t'_o = L/V_{métal} - V_{libre} \qquad (8)$$

et

$$\Delta T/T = V_{métal}/V_{métal} - V_{libre} \qquad (9)$$

Pour le quartz, en coupe ST :

$$\Delta T/T = 2 \cdot 10^{-4}$$

Pour $f_1 = 100$ MHz, la variation de fréquence $\Delta f_1$ obtenue est : $\Delta f_1 = 20$ KHz, ce qui est de l'ordre de grandeur des corrections de fréquence souhaitée.

Un second procédé consisterait à supprimer par découpe au laser un nombre prédéterminé de dents des peignes constituant les transducteurs à électrodes interdigités de façon à modifier la distance moyenne L.

Ces approches simples présentent cependant des inconvénients :

— réglage discontinu par pas, au moins pour une des approches ;

— échauffement local du substrat entraînant des modifications de conditions de propagation des ondes acoustiques et des dérives supplémentaires de la fréquence d'oscillation.

Ces approches ne permettent donc pas la reproductibilité de la fréquence de battement souhaitée.

L'invention propose un procédé permettant le calibrage de la fréquence de battement basé sur la modification de la longueur des trajets dans les connexions disposées entre les lignes à retard acoustique et les éléments électroniques actifs. Le procédé selon l'invention va être décrit en relation avec les figures 5 à 7.

Pour ce faire les connexions d'une des voies du capteur, c'est-à-dire les connexions de rebouclage d'un des oscillateurs vont être dotées d'une configuration telle qu'elles apportent un retard supplémentaire préétabli. Dans les exemples qui viennent d'être décrits, pour obtenir une variation de 1 KHz sur la fréquence d'oscillation, il faut introduire un retard supplémentaire $\Delta t_o = t_o \cdot 10^{-5}$, soit $\Delta t_o$ peu différent de 0.016 ns. La différence des retards entre les deux voies ne doit donc pas dépasser cette valeur maximum de 0.016 ns.

Un câble classique présente un retard de 5 ns pour un mètre. Il faut donc une longueur de câble d'environ 3 mm pour obtenir cette valeur. L'ordre de grandeur est trop faible pour que l'on puisse ajuster avec précision la fréquence d'oscillation par cette méthode.

Selon l'invention, on introduit dans l'une des connexions de rebouclage, par exemple comme illustré sur la figure 6, dans la connexion $e_1$, un dispositif de calibrage à ligne à retard supplémentaire 11. Cette ligne à retard se réduit à une bande métallique dotée d'une structure géométrique prédéterminée et connue sous le nom anglo-saxon de « Microstrip ».

Le procédé de fabrication et de calibrage d'un capteur selon l'invention comprend les étapes suivantes :

1. Elaboration par dépôt métallique sur une plaquette de cristal piézoélectrique du circuit comprenant les deux lignes à retard nécessaires à la constitution des deux oscillateurs du capteur à ondes élastiques de surface. Ces lignes comprennent les transducteurs émetteurs à électrodes interdigitées des deux voies : 5 et 7 ainsi que les transducteurs récepteurs à électrodes interdigitées : 6 et 8. En plus des circuits de liaisons ou connexions habituels, l'une des voies est déséquilibrée par l'incorporation du dispositif à retard 11 précité. A l'exclusion de ce dispositif, le circuit élaboré durant cette étape ne diffère en rien de l'art connu et les procédés habituels de fabrication peuvent être utilisés.

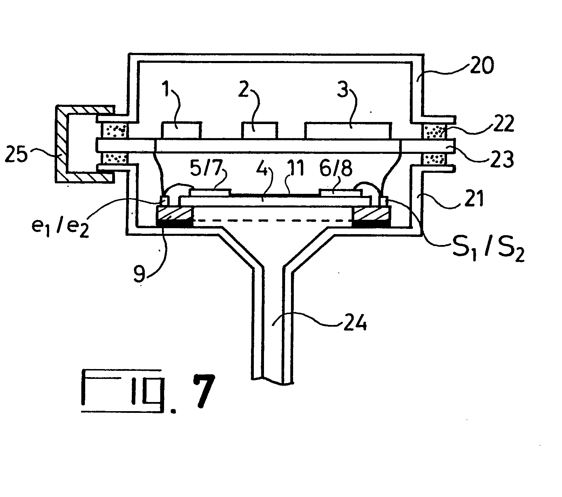

Un exemple d'un tel circuit est illustré sur la figure 6 et porte la référence 4. Des repères 130 ont été portés sur la plaquette 4, permettant son positionnement visuel par rapport à l'orifice pratiqué sur le support 9 (figures 1 et 2). Ces lignes à retard sont ensuite reliées aux circuits électroniques associés : amplificateurs 1 et 2 et mélangeur 3. Un exemple de réalisation concrète sera décrit ultérieurement en relation avec la figure 7.

2. Détermination de la fréquence de sortie $f_S$ du capteur ou fréquence de battement : pour ce faire, le module comportant ces différents composants est, dans le cadre d'une réalisation industrielle, placé dans un banc de mesures alimentant en énergie électrique le module et comportant un fréquence mètre mesurant la fréquence du signal présent sur la sortie S. Le dimensionnement du dispositif à retard supplémentaire 11 doit être calculé de telle sorte que l'écart $f_S$ des fréquences $f_1$ et $f_2$ des signaux de sortie $S_1$ et $S_2$ des deux oscillateurs soit toujours supérieur à une valeur prédéterminée $f_S$ min. A titre d'exemple non limitatif $f_2$ et $f_1$ sont de l'ordre, respectivement, de 1 MHz et 1,1 MHz et donc $f_S$ min > 100 KHz, ce toutes dispersions cumulées. Ces mesures peuvent être effectuées de façon automatique ou manuelle. Les procédés de mesure, bien connus de l'homme de métier, ne seront pas décrits plus avant.

3. Calibrage de la fréquence de sortie : des échancrures 12 sont effectuées dans le dépôt métallique du dispositif à retard supplémentaire 11 à l'aide d'une source laser ou par sablage. Ces échancrures tendent à augmenter le retard apporté par le dispositif 11 et diminuer la fréquence de sortie de l'oscillateur correspondant, et par là-même la fréquence de battement $f_S$. La figure 5 illustre de façon plus détaillée cette méthode. La fréquence $f_S$ du signal de sortie S ou fréquence de battement est mesurée en continu et le processus de découpe se poursuit jusqu'à ce que cette fréquence atteigne la valeur prédéterminée, par exemple 100 KHz, ce de façon continue. En effet, la longueur des échancrures successives n'est pas limitée à la valeur discrète maximale 1 (figure 5 : $12_1$ à $12_{n-1}$) pour chaque zone 13 du dispositif 11 (calibrage grossier). On peut effectuer toute échancrure de longueur intermédiaire l' (figures 5 : $12_n$). La longueur totale de découpe est donc dans le cas général pl + l' (où p est le nombre des entailles de longueur l), entraînant une augmentation proportionnelle du retard. C'est un premier avantage de l'invention par rapport aux procédés qui ont été précédemment exposés. En outre, la perturbation apportée au substrat piézoélectrique par échauffement est très localisée, car limitée aux seules entailles $12_1$ à $12_n$ situées en dehors du parcours suivi par les ondes de surface.

Enfin, bien que la réalisation illustrée par la figure 6 soit particulièrement avantageuse, le dispositif à retard supplémentaire 11 peut être situé hors du substrat 4 sur une plaquette supplémentaire. Cette solution présente cependant des désavantages, entre autre de rendre les dérives en température du dispositif à retard 11 indépendantes de celles des circuits de la plaquette principale 4.

Des exemples de valeurs typiques des paramètres caractéristiques du dispositif à retard 11 sont :
— longueur de la bande métallique : 9 000 µm,
— largeur de la bande métallique : 750 µm,
— pas des échancrures : 1 000 µm.

Comme il est bien connu, les matériaux suivants : quartz ou alumine peuvent être utilisés pour réaliser la plaquette piézoélectrique 4. Les électrodes, les conducteurs de liaison et la bande métallique du dispositif 11 peuvent être réalisés en aluminium, en argent ou paladium.

Un exemple d'application concrète d'un capteur conforme à l'invention va maintenant être décrit en relation avec la figure 7 représentant en coupe un capteur de pression utilisé notamment dans le domaine de l'électronique automobile, pour la commande d'un moteur à combustion interne. L'élément principal de ce capteur est une plaquette piézoélectrique 4 comportant un dispositif à retard supplémentaire 11 et calibrée selon le procédé de l'invention. Les différents éléments du capteur sont contenus dans une enceinte délimitée par deux capots 20 et 21. Les bords de la plaquette 4 sont collés sur un support 9 au moyen d'une colle dure, après positionnement à l'aide des repères 130. Ce support 9 est lui-même collé au moyen d'une colle souple sur la base du capot 21. L'espace délimité par le capot 21, le support 9 et la plaquette 4 communiquent avec un canal d'arrivée de fluides 24 dont on désire mesurer la pression P, soit absolue, soit différentielle (par rapport à la pression atmosphérique par exemple). Le support 9 est fixé au capot 21 de façon à obtenir une étanchéité parfaite entre l'intérieur du canal d'arrivée 24 et l'enceinte définie par l'espace compris entre les capots 21 et 20 au-dessus de la plaquette 4.

Le fluide se trouve en contact avec la face 4 à la face portant les transducteurs 5/7 et 6/8 formant les lignes à retard telles que décrites précédemment. Dans l'enceinte est également placée une plaquette de circuit imprimé 23 fixée par ses extrémités entre les deux bords aplatis des capots 20 et 21. Ceux-ci sont réunis par des joints étanches 22 et éventuellement d'autres moyens d'assemblage 25. Le circuit imprimé 23 porte les différents circuits électroniques, par exemple les amplificateurs 1 et 2 et le circuit mélangeur 3. Cette plaquette de circuit imprimé est reliée électriquement aux transducteurs d'entrée et sortie par les connexions $e_1/e_2$ et $S_1/S_2$. La pression régnant dans l'enceinte supérieure est par exemple $P_o$. La différence de pression $P - P_o$ entraîne des déformations de la plaquette en sens inverse pour les deux lignes à retard, provoquant des variations de fréquence $\Delta f_1$ et $\Delta f_2$ de signe contraire. Le signal de sortie que l'on extrait du mélangeur 3 a donc pour fréquence ; $f_S + \Delta f_S = f_1 - f_2 + \Delta f_1 - \Delta f_2$. On peut filtrer ce signal de façon à obtenir la fréquence $\Delta f_S = \Delta f_1 - \Delta f_2$. On détermine ainsi la différence de pression $P - P_o$.

L'invention n'est pas limitée aux réalisations qui viennent d'être décrites. La plaquette piézoélectrique comportant les deux lignes à retard, et calibrée selon le procédé de l'invention, peut être utilisée pour d'autres types de capteurs et plus généralement pour tous dispositifs comportant deux oscillateurs comprenant des lignes à retard à ondes élastiques de surface. Ces dispositifs produisant des signaux de type numérique peuvent être associés à des ensembles de traitement de signaux numériques et par exemple à des microprocesseurs. Enfin, deux dispositifs de calibrage selon l'invention peuvent être utilisés, placés respectivement dans les boucles de rétroaction de chacun des oscillateurs, sans sortir du cadre de l'invention.

## Revendications

1. Capteur à ondes élastiques de surface du type comportant deux lignes à retard comprenant des transducteurs (5-6, 7-8), portés par une première face d'un support commun (9) constitué par une plaquette piézoélectrique (4) et soumises à des contraintes en sens opposés ; les lignes à retard étant en outre connectées par des circuits de liaison ($e_1$, $e_2$) à des circuits électriques appropriés pour réaliser deux boucles chacune comprenant un amplificateur (1, 2) et constituant chacune un oscillateur produisant des signaux respectivement d'une première et d'une seconde fréquence ($f_1$, $f_2$) transmis à un mélangeur (3) pour produire un signal de sortie (S) d'une troisième fréquence ($f_S$) qui est la différence entre les première et seconde fréquences ; capteur caractérisé en ce qu'il comprend un dispositif de calibrage constitué par au moins une ligne à retard supplémentaire (11) ayant la forme d'une bande métallique portée par un support et ajustable par usinage laser ou par sablage, insérée dans les circuits de liaison d'un des oscillateurs.

2. Capteur selon la revendication 1, caractérisé en ce que ladite bande métallique portée par un support comporte une série de plages métalliques crénelées (13) disposées le long d'un axe parallèle à la plus grande des dimensions de la bande métallique dans lesquelles des échancrures (12) régulièrement espacées ont été pratiquées.

3. Capteur selon la revendication 2, caractérisé en ce qu'en outre la bande métallique est localisée sur la première face du support commun (4).

4. Capteur selon l'une quelconque des revendications 1 à 4, caractérisé en ce que les transducteurs (5-6, 7-8) sont des transducteurs électromécaniques à peignes interdigités.

5. Procédé de calibrage de la fréquence ($f_S$) du signal de sortie d'un capteur selon l'une quelconque des revendications 1 à 4, caractérisé en ce que la fréquence ($f_1$) du signal produit par l'oscillateur comprenant le dispositif de calibrage (11) constitué par une ligne à retard supplémentaire ayant la forme d'une bande métallique étant choisie supérieure d'une valeur prédéterminée à la fréquence ($f_2$) du signal produit par le second oscillateur, il est procédé aux étapes suivantes :
— mesure en continu de la valeur de la fréquence ($f_S$) du signal de sortie ;
— réalisation d'au moins une échancrure (12) à l'aide d'une source laser ou par sablage, dans la bande métallique (11) de façon à augmenter le retard apporté par la ligne à retard supplémentaire et à diminuer en proportion la fréquence ($f_1$) du signal produit par l'oscillateur comportant la ligne à retard supplémentaire, jusqu'à ce que la fréquence ($f_S$) du signal de sortie (S) atteigne la valeur prédéterminée.

6. Procédé selon la revendication 5, caractérisé en ce que, la bande métallique comportant une série de plages métalliques crénelées (13), chacune des échancrures (12) pratiquées dans la bande métallique (11) ménage une zone de faible largeur, s'étendant à partir du bord de la bande métallique, opposé aux plages crénelées (13) sur une longueur (l) prédéterminée inférieure à la largeur de la bande métallique suivant une direction sensiblement orthogonale à la plus grande des dimensions de cette bande ; la zone étant entièrement dépourvue de métal après découpe par la source laser ou par sablage.

7. Procédé selon la revendication 6, caractérisé en ce qu'il est procédé à des échancrures de longueur fixe ($12_1$-$12_{n-1}$) égale à la longueur prédéterminée (l) pour réaliser un calibrage grossier et à une échancrure ($12_n$) de longueur variable (l') inférieure à la longueur prédéterminée (1) pour réaliser un calibrage fin.

## Claims

1. Elastic surface wave probe of the type comprising two delay lines comprising transducers (5-6, 7-8) carried by the first face of a common support (9) formed of a piezoelectric chip (4) and exposed to stresses in opposite senses ; the delay lines being further connected to appropriate electric circuits through connection circuits ($e_1$, $e_2$) for forming two loops each comprising an amplifier (1, 2) and each forming an oscillator producing signals of first and second frequencies ($f_1$, $f_2$), respectively, transmitted to a mixer (3) for producing an output signal (S) of a third frequency ($f_S$) which is the difference between the first and second frequencies ; the probe being characterized in that it comprises a calibration device formed by at least one additional delay line (11) having the form of a metallic strip carried by a support and adapted to be adjusted by laser or sandblast machining, inserted into the connection circuits of one of the oscillators.

2. Probe in accordance with claim 1, characterized in that said metallic strip carried by a support comprises a series of metallic indented zones (13) arranged along an axis which is parallel to the major dimension of the metallic strip, wherein regularly spaced cutouts (12) are formed.

3. Probe in accordance with claim 2, characterized in that the metallic strip is further located on the first face of the common support (4).

4. Probe in accordance with any of claims 1 to 4, characterized in that the transducers (5-6, 7-8) are electromechanic interdigitated comb transducers.

5. Method of calibrating the frequency ($f_S$) of the output signal of a probe in accordance with any of claims 1 to 4, characterized in that, the frequency ($f_1$) of the signal produced by the oscillator comprising the calibrating device (11) formed by an additional delay line of the form of a metallic strip being selected in excess of the frequency ($f_2$) of the signal produced by the second oscillator by a predetermined amount, the following steps are performed :
— continuous measurement of the value of the frequency ($f_S$) of the output signal ;
— at least one cutout (12) is formed in the metallic strip (11) using a laser source or by sandblasting in a manner to amplify the delay produced by the additional delay line and to reduce, in proportion, the frequency ($f_1$) of the signal produced by the oscillator comprising the additional delay line, until the frequency ($f_S$) of the output signal (S) reaches the predetermined value.

6. Method in accordance with claim 5, characterized in that, the metallic strip comprising a series of metallic indented zones (13), each of the cutouts (12) formed in the metallic strip (11) comprising a zone of narrow width extending from the edge of the metallic strip opposite to the indented zone (13) across a predetermined length (1) which is smaller than the width of the metallic strip in a direction substantially perpendicular to the major dimension of this strip ; the zone being totally free of metal after having been cut out using the laser source or by sandblasting.

7. Method in accordance with claim 6, characterized in that cutouts of fixed lengths ($12_1$-$12_{n-1}$) equal to the predetermined length (1) are formed for providing a rough calibration, and a cutout ($12_n$) of variable length (l') smaller than the predetermined length (I) is formed for providing fine calibration.


**Ansprüche**

1. Mit elastischen Oberflächenwellen arbeitender Meßwertaufnehmer mit zwei Verzögerungsleitungen, die Wandler (5-6, 7-8) umfassen, welche von der ersten Fläche eines gemeinsamen Trägers (9) getragen werden, der aus einem piezoelektrischen Plättchen (4) gebildet ist, wobei die Verzögerungsleitungen in entgegengesetztem Sinn auf sie einwirkenden Belastungen ausgesetzt sind und ferner über Anschlußkreise ($e_1$, $e_2$) mit geeigneten elektrischen Schaltungen verbunden sind, um zwei Schleifen zu bilden, von denen jede einen Verstärker (1, 2) enthält und jeweils einen Oszillator bildet, der Signale einer ersten bzw. einer zweiten Frequenz ($f_1$, $f_2$) erzeugt, die an einen Mischer (3) angelegt werden, um ein Ausgangssignal (S) einer dritten Frequenz ($f_S$) zu erzeugen, welche die Differenz zwischen der ersten und der zweiten Frequenz ist ; wobei der Meßwertaufnehmer dadurch gekennzeichnet ist, daß er eine Eichvorrichtung umfaßt, die aus wenigstens einer zusätzlichen Verzögerungsleitung (11) gebildet ist, die die Form eines Metallstreifens aufweist, der von einem Träger getragen ist und durch Laserbearbeitung oder Sandstrahlen abgleichbar ist, und die in die Anschlußkreise eines der Oszillatoren eingefügt ist.

2. Meßwertaufnehmer nach Anspruch 1, dadurch gekennzeichnet, daß der genannte Metallstreifen, der von einem Träger getragen ist, eine Reihe von ausgezackten Metallflächen (13) umfaßt, die entlang einer Achse angeordnet sind, welche parallel zu der größten Abmessung des Metallstreifens ist, wobei in diesen Metallflächen regelmäßig voneinander beabstandete Aussparungen (12) angebracht sind.

3. Meßwertaufnehmer nach Anspruch 2, dadurch gekennzeichnet, daß ferner der Metallstreifen auf der ersten Fläche des gemeinsamen Trägers (4) angeordnet ist.

4. Meßwertaufnehmer nach einem der Ansprüche 1 bis 4, dadurch gekennzeichnet, daß die Wandler (5-6, 7-8) elektromechanische Wandler mit verzahnten Kammelektroden sind.

5. Verfahren zum Eichen der Frequenz ($f_S$) des Ausgangssignals eines Meßwertaufnehmers nach einem der Ansprüche 1 bis 4, dadurch gekennzeichnet, daß für eine Frequenz ($f_1$) des Signals, welches von dem Oszillator erzeugt wird, der die Eichvorrichtung (11) umfaßt, die durch eine zusätzliche Verzögerungsleitung in Form eines Metallstreifens gebildet ist, welche um einen vorbestimmten Wert größer gewählt ist als die Frequenz ($f_2$) des von dem zweiten Oszillator abgegebenen Signals, die folgenden Verfahrensschritte durchgeführt werden :

**0 023 450**

— der Wert der Frequenz ($f_S$) des Ausgangssignals wird kontinuierlich gemessen ;

— wenigstens eine Aussparung (12) wird mittels einer Laserquelle oder durch Sandstrahlen in dem Metallstreifen (11) angebracht, so daß die Verzögerung vergrößert wird, welche die zusätzliche Verzögerungsleitung verursacht, und proportional hierzu die Frequenz ($f_1$) des Signals reduziert wird, das der Oszillator erzeugt, welcher die zusätzliche Verzögerungsleitung umfaßt, bis die Frequenz ($f_S$) des Ausgangssignals (S) des vorbestimmten Wert erreicht.

6. Verfahren nach Anspruch 5, dadurch gekennzeichnet, daß für einen Metallstreifen, der eine Reihe von ausgezackten Metallflächen (13) umfaßt, jede der in dem Metallstreifen (11) angebrachten Aussparungen (12) eine Zone geringer Breite aufweist, die sich vom Rand des Metallstreifens, der den ausgezackten Flächen (13) gegenüberliegt, über eine vorbestimmte Länge (1) erstreckt, die geringer ist als die Breite des Metallstreifens, und in einer Richtung, die im wesentlichen senkrecht zu der größten Abmessung dieses Streifens ist ; wobei die Zone nach dem Ausschneiden durch eine Laserquelle oder durch Sandstrahlen völlig von Metall befreit ist.

7. Verfahren nach Anspruch 6, dadurch gekennzeichnet, daß Aussparungen fester Länge ($12_1$-$12_{n-1}$) hergestellt werden, die gleich der vorbestimmten Länge (I) ist, um eine Grobeichung vorzunehmen, und eine Aussparung ($12_n$) variabler Länge (I') angebracht wird, die geringer als die vorbestimmte Länge (I) ist, um eine Feineichung vorzunehmen.

Fig.1

Fig.2

$\Phi_A$

$\Phi_C$    $\Phi_0$

$\boxed{\text{Fig}}$.3

L

5    6

$e_1$    $S_1$

10    L'

$m$    $m$

$e_2$    $S_2$

7    $\boxed{\text{Fig}}$.4    8

$\boxed{\text{Fig}}$.5    13

$\ell$

11

$\ell'$

$12_1$    $12(n-1)$    $12_n$

Fig. 6

Fig. 7